(19) **Europäisches Patentamt**
**European Patent Office**
**Office européen des brevets**

(11) **EP 1 357 787 B1**

(12) **EUROPÄISCHE PATENTSCHRIFT**

(45) Veröffentlichungstag und Bekanntmachung des Hinweises auf die Patenterteilung:
**23.11.2011 Patentblatt 2011/47**

(21) Anmeldenummer: **01993146.8**

(22) Anmeldetag: **21.12.2001**

(51) Int Cl.:
***A01K 1/00*** *(2006.01)*

(86) Internationale Anmeldenummer:
**PCT/EP2001/015278**

(87) Internationale Veröffentlichungsnummer:
**WO 2002/054874 (18.07.2002 Gazette 2002/29)**

(54) **EINSTREU FÜR KATZEN UND KLEINTIERE**

LITTER FOR CATS AND SMALL ANIMALS

LITIÈRE POUR CHATS ET PETITS ANIMAUX

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **21.12.2000 DE 10064347**
**03.02.2001 DE 10105318**

(43) Veröffentlichungstag der Anmeldung:
**05.11.2003 Patentblatt 2003/45**

(73) Patentinhaber: **Nordzucker AG**
**38100 Braunschweig (DE)**

(72) Erfinder:
• **BUTTERSACK, Christoph**
**38126 Braunschweig (DE)**
• **WULLBRANDT, Dieter**
**38321 Denkte (DE)**

(74) Vertreter: **Einsel, Martin**
**Patentanwälte Einsel & Kollegen**
**Jasperallee 1a**
**38102 Braunschweig (DE)**

(56) Entgegenhaltungen:
**EP-A- 0 676 135    US-A- 4 883 021**
**US-A- 5 230 305    US-A- 5 970 916**
**US-A- 6 089 189**

## Beschreibung

Die Erfindung betrifft eine Einstreu für Katzen und Kleintiere, bestehend aus einer Mischung aus getrocknetem Material pflanzlichen Ursprungs und einem die Verklumpung der Mischung bei Feuchtigkeit fördernden Hilfsstoff. Sie betrifft ferner ein Verfahren zur Herstellung einer solchen Einstreu.

Einstreu für Katzen und Kleintiere, auch als Tiereinstreu bezeichnet, ist in erster Linie für Haustiere vorgesehen. Die Einstreu wird ausgebreitet und als Lager für das Tier verwendet. Die Einstreu wird vom Tier im Laufe der Zeit mit Körperflüssigkeit, insbesondere lokal mit Urin benetzt. Der generelle Wunsch besteht, dass die so mit Urin benetzte Einstreu zum einen möglichst die gesamte vom Tier abgegebene Feuchtigkeit aufsaugt, um Verschmutzungen der Umgebung zu verhindern, und andererseits eine für den Betreuer des Tieres möglichst leichte Entsorgung der gesamten Einstreu oder auch gegebenenfalls nur der auf diese Weise verbrauchten Bestandteile der Einstreu zu ermöglichen.

Im Hinblick auf die zunehmende Zahl an Haustieren sind in den letzten Jahren viele Vorschläge für Verbesserungen derartiger Einstreu für Katzen und Kleintiere gemacht worden. Am weitesten verbreitet sind dabei Produkte auf der Grundlage anorganischer mineralischer Materialien, insbesondere Bentonit. Dieses Material ist kapillarfähig, weist eine relativ große innere Oberfläche und damit eine hohe Bindefähigkeit auf. Nachteilig ist, dass Bentonit nicht biologisch abbaubar oder kompostierbar ist und auch nicht aus nachwachsenden Rohstoffen besteht.

**Gewünscht** werden daher eher ökologisch vollständig rezyklierbare Produkte.

In der DE 195 43 311 C1 wird hierfür ein Granulat aus Holzpartikeln vorgeschlagen, beispielsweise aus zerkleinerten Hobelspänen, wie sie bei der Holzverarbeitung als Abfallprodukt anfallen und daher kostengünstig und umweltfreundlich zu erhalten sind. Vergleichbar ist ein Vorschlag aus der DE 37 07 473 C2, wonach als Ausgangsmaterial Abfall aus der Papierherstellung verwendet wird, beispielsweise Papiermasse oder Holzschliff; alternativ werden Pflanzenfasern vorgeschlagen.

Nachteil bei derartigen Produkten mit einem hohen Anteil an Fasern ist, dass diese Teilchen relativ schwer deformierbar sind. Zwar sind zum Beispiel Holzspäne nicht inkompressibel, aber auch nicht leicht deformierbar, und besitzen insbesondere eine unbefriedigende plastische Verformbarkeit, während die elastische noch zufriedenstellend ist. Bei Pflanzenfasern, insbesondere bei Zellverbänden des Holzes, tritt durch Ausbildung von Sekundärwänden eine Versteifung auf, die auch mit dem Begriff "Verholzung" bezeichnet wird.

Wesentlich geeigneter wäre daher an sich ein Material pflanzlichen Ursprungs, das keine oder möglichst geringe Faseranteile aufweist. Vorgeschlagen worden ist zum Beispiel die Verwendung von ausgelaugten, ausgepressten und anschließend getrockneten Zuckerrübenschnitzeln in der EP 0 676 135 A1. Auf das gleiche Material bezieht sich auch die US-PS 5,605,114. Alternativ kommt auch noch der Einsatz etwa von Citruspellets oder ausgelaugten Zichorienwurzeln in Betracht, wie er auch schon in der US-PS 4,386,580 bzw. der US-PS 5,605,114 angeregt wird.

Die Verwendung eines derartigen getrockneten Materials pflanzlichen Ursprungs allein führt zwar auch schon zu einer brauchbaren Einstreu für Katzen und Kleintiere, die auch eine hohe Wasseraufnahmefähigkeit aufweist. Für die anschließende Entsorgung ist jedoch außerdem die Bildung von Klumpen sehr erwünscht, da diese benutzerfreundlich herausgenommen werden können. Diese benutzerfreundlichen Klumpen werden durch die Verwendung des erwähnten Materials pflanzlichen Ursprungs noch nicht gebildet. Es hat sich herausgestellt, dass dazu der Zusatz von Hilfsstoffen zweckmäßig ist, die eine Verklumpung der Mischung bei Feuchtigkeitszufuhr fördern. An den entsprechenden Stellen, an denen die Einstreu vom Tier lokal mit Urin benetzt wird, entsteht durch den fördernden Hilfsstoff ein Klumpen, der später leichter herausgenommen werden kann.

Eine Verklumpung kann dadurch erzielt werden, dass das Material, das das Wasser bzw. den Urin aufsaugt, ein Gel bildet. Ein Gel ist ein formbeständiges, leicht deformierbares Material, das einerseits ein Verdickungsmittel, wie beispielsweise Gelatine, und andererseits eine Flüssigkeit, hier also das Wasser bzw. den Urin, als Dispersionsmittel aufweist. Das Gel entsteht also erst durch die Flüssigkeitszufuhr. Diesen Effekt nutzt man zum Beispiel in der US-PS 5,183,010 durch den Zusatz von Polymeren mit Hydroxylgruppen zu einem auf der Grundlage von Bentonit bestehenden Produkt für eine Tiereinstreu. Auch in der EP 0 298 143 A1 wird ein Acrylsäure-Copolymer zu inerten porösen Substratpartikeln in einer Menge zugefügt, die ausreicht, den Urin zu agglomerieren und mit den Partikeln ein Gel zu bilden, das eine ausreichende mechanische Stabilität hat, um als Ganzes aus dem Behälter mit der Tiereinstreu entfernt zu werden.

In der bereits erwähnten DE 195 43 311 C1 wird als Hilfsmittel für die Verklumpung Guarkernmehl, das ist ein aus Galaktose und Mannose bestehendes Polysaccharid, nämlich ein Galaktomannan, eingesetzt. Unter Zugabe von Borax bildet sich dort ein Gel, das in der Lage ist, die weiteren größeren saugfähigen Partikel, also die Sägespäne, mit einem Durchmesser von 0,5 bis 5 mm zu umschließen.

Problematisch ist, dass aus Sägespänen zusammengesetzte kompaktierte Teilchen die Neigung haben, bei der Aufnahme von Flüssigkeit und der damit verbundenen Volumenvergrößerung wieder zu zerfallen. Es besteht die Gefahr, dass sie die Quellung nicht als Ganzes überstehen. Um dies zu vermeiden, müssen die Anteile des gelbildenden Hilfsmittels, nämlich an Guarkernmehl, relativ groß sein; typisch sind Anteile zwischen 13 % und 38 %, wobei auch nachteilig ist, dass das Guarkernmehl die kostspieligste Komponente der Gesamtmischung ist.

Wünschenswert wäre es, eine klumpende Einstreu für Katzen und Kleintiere zu haben, die mit möglichst wenigen kostspieligen Hilfsstoffen auskommt und die günstigen leicht deformierbaren und zugleich wasseraufsaugenden Eigenschaften von Zuckerrübenteilchen besitzt. Bisher sind Zuckerrübenschnitzel in allen bekannten Vorschlägen nur für nicht klumpende Einstreu und nur in der Form, wie sie bei der Zuckerherstellung anfallen, als Katzenstreu verwendet worden, nämlich als flache gebogene Teilchen mit Dimensionen von etwa 1 cm bis 3 cm. Allenfalls wurden die Teilchen nachträglich durch Pelletieren und anschließende Zerkleinerung in eine den üblichen Einstreus ähnliche und geeignetere Form gebracht, etwa wie in der EP 0 676 135 A1, oder sie wurden wie in der US-PS 4,386,580 vorgeschlagen auf eine Größe zwischen 0,3 mm und 1,0 mm zerkleinert. In der DE 37 07 473 C2 wird die Verwendung von Pflanzenfasern, unter anderem Zuckerrüben, beschrieben. Das Ausgangsmaterial wird auf eine Größe zwischen 1 mm und 10 mm zerkleinert, um daraus durch Granulierung eine Katzenstreu herzustellen.

Aufgabe der Erfindung ist es daher, eine solche Einstreu für Katzen und Kleintiere vorzuschlagen, die den obengenannten Wünschen Rechnung trägt.

Diese Aufgabe wird dadurch gelöst, dass das getrocknete Material pflanzlichen Ursprungs in einem Korngrößenspektrum vorliegt, bei dem die Durchmesser von 80 % der Teilchen bezogen auf die Masse zwischen mehr als 0 $\mu$m und weniger als 1.000 $\mu$m betragen, bei dem die Massensummenverteilung der Korngrößenverteilung zumindest in dem Bereich zwischen 50 $\mu$m und 1.000 $\mu$m größer ist als eine integrierte statistische Gauß-Verteilung, bei der die Gauß-Verteilung eine Gauß'sche Normalverteilung mit einem Mittelwert von 100 $\mu$m und einer Standardabweichung von 800 $\mu$m ist, und bei dem die Korngrößenverteilung um mehr als 10 % von dieser statistischen Gauß-Verteilung abweicht.

Bevorzugt ist es, wenn die obere Grenze bei 1.000 $\mu$m, insbesondere bei 600 $\mu$m oder sogar nur bei 400 $\mu$m liegt.

Als Grundlage für die Bestimmung der betreffenden Korngrößenverteilung des trockenen Materials ist die Laserbeugungsmethode mit einem Messbereich von mindestens 8 $\mu$m bis 1.600 $\mu$m besonders geeignet.

Die Massensummenverteilung des Ausgangsmaterials folgt somit erfindungsgemäß nicht einer Funktion die sich aus einer Gauß'schen Normalverteilung ergibt, sondern einer positiv gekrümmten Funktion mit nur einem Wendepunkt vor der maximalen Partikelgröße. Die erste Ableitung dieser Funktion ist also ebenfalls bis zu diesem Wendepunkt positiv.

Dabei ist natürlich zu berücksichtigen, dass der gemessene reale vom idealen Verlauf abweichen kann. Dies soll im Rahmen einer Standardabweichung von 30 % noch möglich sein.

Mit einer derartig definierten Größenverteilung lässt sich die Problematik überraschend lösen. Anders als alle bekannten Vorschläge wird jetzt nicht nur das Material oder wie in einigen Fällen der Korngrößen des Materials Betrachtung geschenkt, sonder erstmals auch der Verteilung der Korngrößen über ein Spektrum mit verschiedenen Durchmessern. Tatsächlich zeigen sich in Versuchen die besseren Eigenschaften einer bestimmten, vom üblichen deutlich abweichenden Verteilung.

In den bekannten Rezepturen zur Herstellung klumpender Einstreus ist für den Wasser aufsaugenden Grundstoff lediglich ein Größenbereich, nämlich eine untere und eine obere Grenze, angegeben.

So schlägt zum Beispiel die DE 195 43 311 C1 Sägespäne mit einer Größe im Bereich zwischen 0,5 mm und 5 mm, also 500 $\mu$m bis 5.000 $\mu$m vor. Es scheint zunächst einleuchtend, dass relativ große und damit weniger Teilchen den Zusammenhalt der aus den Teilchen zusammengesetzten Pellets sowie der gebildeten Klumpen verbessern und daher von Vorteil sind. Allerdings benötigt man dann auch viel mehr Hilfsstoffe für die Verklumpung.

Für die Zerkleinerung von Zuckerrübenschnitzeln werden beispielsweise in der US-PS 4,386,580 eine Größe zwischen 0,3 mm und 1,0 mm und in der DE 37 07 473 C2 zwischen 1 mm und 10 mm vorgeschlagen.

Die DE 41 01 243 A1 wiederum beschreibt eine Tierstreu bestehend aus Celluloseprodukten, beispielsweise Sägemehl, und einem Beschwerungsmittel, vorzugsweise anorganischen Füllstoffen, und einem Verdicker bzw. Bindemittel, wobei der Korngrößenbereich unterhalb von 1.000 $\mu$m, vorzugsweise unterhalb von 500 $\mu$m, zum Beispiel zwischen 100 $\mu$m und 300 $\mu$m liegt.

In der US-PS 5,183,010 wird eine Klumpstreu beschrieben, die aus einem Flüssigkeit absorbierenden Material (Tonmineral, Papier, Holz- oder Sägespäne, organische Fasern usw.), einem wasserlöslichen Polymer und einem beschleuniger" (Borat) besteht, die beim Kontakt mit Wasser zu einem Klumpen agglomeriert. Hierbei soll die bevorzugte Größe der Wasser aufsaugenden Partikel zwischen 70 $\mu$m und 3.000 $\mu$m liegen.

In der US-PS 5,230,305 und der WO 96/34323 wird eine klumpende Katzenstreu auf der Basis natürlicher Produkte, vorzugsweise aus Getreidemehl, beschrieben, wobei 75 % der Partikel zwischen 250 $\mu$m und 2.500 $\mu$m liegen sollen. Die restlichen 25 % der Teilchen können also sowohl unterhalb von 250 $\mu$m als auch oberhalb von 2.500 $\mu$m liegen.

Erfindungsgemäß hat sich nun herausgestellt, dass eine wesentlich bessere Verklumpungsneigung entsteht, wenn die Teilchen pflanzlichen Ursprungs voneinander sehr unterschiedliche Größen besitzen. Als physikalische Erklärung ist zu vermuten, dass die vielen unterschiedlich großen Teilchen räumlich zu einer dichteren Packung führen. Zwischenräume zwischen gleich großen Teilchen wie bei einer rein statistischen Verteilungskurve führen zu vielen Leerräumen, die den Kontakt der Partikel untereinander reduzieren und auch die gleichzeitig gewünschte Verklumpung nicht fördern. Bei unterschiedlich großen Korngrößen der jeweiligen Teilchen werden die Zwischenräume dann von entsprechend kleineren Teilchen ausgefüllt.

Durch die Erfindung wird also eine Einstreu geschaffen, bei der die kompaktierten Teilchen im Innern so aufgebaut sind, dass sie bei der Aufnahme von Wasser und der damit verbundenen Volumenvergrößerung nicht auseinanderfallen, sondern als kompaktierte Teilchen die Quellung als Ganzes überstehen. Außerdem werden die Teilchen untereinander unter Bildung von Klumpen aneinander heften und auch verklumpt bleiben.

Besonders günstig ist es, wenn als Material pflanzlichen Ursprungs Zuckerrübenschnitzel und/öder ausgelaugte Zichorienwurzeln und/oder Citruspellets eingesetzt werden.

Zuckerrübenschnitzel sind besonders bevorzugt, weil diese in großen Mengen sehr kostengünstig zur Verfügung stehen und gleichzeitig optimale Eigenschaften für die Tiereinstreu besitzen. Es ist aber möglich und zur Erzielung bestimmter Geruchseigenschaften bzw. Geruchsdämmungen der Tiereinstreu sinnvoll, zum einen Citruspellets zusätzlich zu verwenden oder auch diese ausschließlich einzusetzen. Auch eine Verwendung von Beimengungen anderer Materialien pflanzlichen Ursprungs ist denkbar.

Im Hinblick auf das Erzielen eines als angenehm empfundene Geruches der Rübenschnitzel vor dem Gebrauch haben sensorische Untersuchungen ergeben, dass Beimischungen poröser anorganischer Stoffe eine positive Wirkung haben können. Der Anteil dieser Stoffe sollte aber, um die Verklumpungseigenschaften nicht zu beeinträchtigen, in Summe unter 20 % liegen. Die Verwendung eines Naturzeolithen vom Typ Clinoptilolith ist bereits allein oder in Kombination mit einem Tonmaterial in der WO 91/05464 im Hinblick auf die Bindung des von den tierischen Exkrementen und dem Urin ausgehenden Geruch beschrieben worden. Die hier vorgenommenen Untersuchungen haben jedoch gezeigt, dass der Zeolith auch den typischen Eigengeruch der Rübenschnitzel zu reduzieren vermag.

Überraschenderweise bewirkt auch das als solches schon als Katzenstreu eingesetzte Tonmineral Bentonit eine Verminderung des typischen Eigengeruchs der Rübenschnitzelgewebes. Die Tests haben gezeigt, dass insbesondere Bentonite mit einem hohen Anteil an Montmorillonit dafür geeignet sind. Beste Ergebnisse werden erzielt, wenn der Montmorillonit in der mit aliphatischen Aminen oder mit Alkaliionen ausgetauschten, insbesondere der $Na^+$-Form, oder in der $H^+$-Form vorliegt. Auch Kieselgur kann verwendet werden. Besonders geeignet ist ein aktiviertes Bentonit mit einer Oberfläche von mehr als 100 $m^2$/g.

Von Vorteil ist es aber auch, wenn als geruchsmindernde Zusätze Cyclodextrin, insbesondere β-Cyclodextrin, und/oder Salze von Übergangsmetallionen und/- oder Aluminiumsalze eingesetzt werden. Cyclodextrine werden in Sprays zur Neutralisation von Gerüchen verwendet. Eine Verminderung des Eigengeruchs auch durch Beimischung von Cyclodextrin in Katzenstreu ist ebenfalls nur im Hinblick auf die Bindung des von den tierischen Exkrementen und dem Urin ausgehenden Geruchs erwähnt worden, zum Beispiel in der US-PS 4,883,021.

Auch das Zinksalz der Ricinolsäure hat sich in Sprays zur Neutralisation von insbesondere stickstoff- und schwefelhaltigen Geruchsmolekülen bewährt, vergleiche R. Zekom, COSMETICS & TOILETRIES MAGAZIN 112 (1997), Seiten 37 bis 40. Geringe Mengen hinzugefügter Salze von Übergangsmetallionen, wie Zink-Nickel- und Eisensalze verminderten im sensorischen Test den Eigengeruch. Es ist davon auszugehen, dass entsprechend der Austauschkapazität der im Pektin der Rübenschnitzel enthaltenen Carboxylgruppen von etwa 1 meq/g schon bei der Gleichgewichtsfeuchte im trockenen Zustand (spätestens bei der Befeuchtung) die Metallionen - wenn sie die oben genannte Konzentration nicht überschreiten - an die Gerüstsubstanz der Rübenschnitzel gebunden werden (vergleiche Vincent M. Dronnet et al., INDUSTRIES ALIMENTAIRES & AGRICOLES 116 (1999), Seiten 29 bis 35). Eine geruchsmindernde Wirkung wurde auch nach der Zugabe von Aluminiumsalzen beobachtet.

Durch das spätere Kompaktieren der Mischungen werden die Zusatzstoffe mit eingebunden, so dass eine Entmischung oder Ablagerung dieser Substanzen nicht zu erwarten ist.

Das entstehende Produkt, also die Tiereinstreu, ist organischen Ursprungs und biologisch abbaubar sowie kompostierbar. Allen Ansprüchen der Käufer an eine ökologisch vollständig rezyklierbare Verbrauchsware wird man damit gerecht.

Überraschenderweise werden zum Erreichen einer bestimmten Stärke der Verklumpung deutlich weniger an Hilfsstoffen benötigt, als zu erwarten war und zum Beispiel in der DE 195 43 311 C1 mit 13 % bis 38 % Guarkernmehl angegeben ist. Die die Verklumpung fördernden Hilfsmittel sind im Regelfall weniger kostengünstig erhältlich als der poröse Grundstoff, beispielsweise die Zuckerrübenschnitzel. Einsparungen der Menge oder des Intensitätsgrades derartiger Hilfsstoffe sind daher von außerordentlichem Vorteil.

Zuckerrübenteilchen sind sehr leicht deformierbar, wobei die plastische, Verformbarkeit im Vergleich zur elastischen deutlich überwiegt, insbesondere dann, wenn das Material bereits Wasser oder andere Flüssigkeit aufgesaugt hat. Die günstigeren mechanischen Eigenschaften von Zuckerrübenschnitzeln im Vergleich zu feuchten Holzspänen sind in anderem Zusammenhang schon durch Pressversuche nachgewiesen worden, siehe Christoph Buttersack, Grundlage der mechanischen Entwässerung von Zuckerrübenschnitzeln, in: Zuckerindustrie 119 (1994) Nr. 10, Seite 831 bis 846, insbesondere Seite 835. Zuckerrübengewebe besteht überwiegend aus jungen undifferenzierten, sogenannten parenchymatischen Zellen, während die Zellverbände von herkömmlich eingesetzten Sägespänen, also von Holz, versteift sind, vergleiche H. Mohr, P. Schopfer, "Lehrbuch der Pflanzenphysiologie" 3. Auflage 1978, Seiten 37 bis 40.

Zuckerrübenschnitzel besitzen ohnehin schon eine große Wasseraufnahmekapazität und eine Geruchsabsorptionseigenschaft, werden aber durch die neuartige und ungewöhnliche Korngrößenverteilung in ihren Eigenschaften deutlich verbessert.

Bei der Herstellung der erfindungsgemäßen Einstreu geht man von getrockneten unmelassierten Zuckerrübenschnitzeln aus. Diese extrahierten Zuckerrübenschnitzel und gegebenenfalls zugemengte ausgelaugte Zichorienwurzeln und/oder Citruspellets und/oder andere, insbesondere nicht verholzte Pflanzenrückstände, werden in einer geeigneten Mühle, vorzugsweise einer Hammermühle gemahlen, Die zunächst noch entstehenden Teilchen mit einer bestimmten maximalen Korngröße werden durch Sieben abgezogen und in den Mahlprozess zurückgeführt. Dafür wird ein Sieb mit einer Maschenweite von 200 $\mu$m bis 1.000 $\mu$m, vorzugsweise von 500 $\mu$m bis 900 $\mu$m, gewählt. Die Mühle wird so eingestellt, dass ein breites Korngrößenspektrum resultiert, bei dem der Massenanteil der Teilchen unter 100 $\mu$m mehr als zwei Drittel des Massenanteils der Teilchen zwischen 100 $\mu$m und 400 $\mu$m beträgt und die entsprechende Summenmassenverteilung möglichst monoton ansteigt und nur einen Wendepunkt vor der Partikelobergrenze hat.

Durch diese Maßnahmen wird erreicht, dass das getrocknete Material pflanzlichen Ursprungs in einem Korngrößenspektrum vorliegt, bei dem die Durchmesser von 80 % der Teilchen bezogen auf die Masse zwischen mehr als 0 $\mu$m und weniger als 1.000 $\mu$m betragen, bei dem die Massensummenverteilung der Korngrößenverteilung zumindest in dem Bereich zwischen 50 $\mu$m und 1.000 $\mu$m größer ist als eine integrierte statistische Gauß-Verteilung, bei der die Gauß-Verteilung eine Gauß'sche Normalverteilung mit einem Mittelwert von 100 $\mu$m und einer Standardabweichung von 800 $\mu$m ist, und bei dem die Korngrößenverteilung um mehr als 10 % von dieser statistischen Gauß-Verteilung abweicht,

Der grundsätzliche Typ der Korngrößenverteilung wird schon durch die Art der verwendeten Mühle beeinflusst. Schneidmühlen, wie zum Beispiel ein Walzenstuhl, führen im Idealfall zu einer Zerteilung des Ausgangsmaterials, wodurch eher eine näherungsweise statistische Verteilung resultiert, wohingegen eine Hammermühle grundsätzlich eine viel breitere Verteilung liefert. Natürlich kann auch durch geeignete, in der Getreideverarbeitung übliche Trennstufen, nämlich zusätzliches Sieben oder Windsichten, und weitere Rückführungen der Grobfraktion in die Mühle eine Verbreiterung der Korngrößenverteilung erreicht werden. Im Rahmen dieser Vorgaben wird die Mahlung so eingestellt, dass die Verklumpung des aus dieser Mischung erzeugten Endproduktes möglichst groß ist.

Das Vorhandensein einzelner Teilchen mit einem Durchmesser von mehr als 1.000 $\mu$m hat sich als relativ unkritisch herausgestellt. Sie stören den positiven Effekt der erfindungsgemäßen Korngrößenverteilung nicht, sind aber hinsichtlich der Feuchtigkeitsaufnahme pro Masse weniger günstig. Sie sind also weniger erwünscht, sollten nicht mehr als 20 %, möglichst weniger als 10 %, der Masse einnehmen, eine vollständige Aussiebung oder Aussortierung ist aber meist nicht rentabel.

Das polydisperse Mahlgut wird mit einem die Verklumpung fördernden Hilfsstoff versetzt, wozu insbesondere ein pulverförmiges wasserlösliches Polymer verwendet wird. Ebenfalls pulverförmig werden eventuell weitere Zusätze für die Neutralisation des Rübengeruches beigemischt. Dieses unveränderte trockene Mischungsmaterial wird nun kompaktiert, beispielsweise in trockenem Zustand tablettiert, unter Zufuhr von Wasser und Dampf pelletiert, extrudiert oder expandiert. Danach wird die Feuchte des so erzeugten Produktes gegebenenfalls durch Kühlen und Trocknen auf den Gleichgewichtswert reduziert. Anschließend kann das Produkt mechanisch zerkleinert werden. Auch die Größe der bei diesem Zerkleinerungsvorgang entstehenden Teilchen kann optimiert werden. Diese Größe sollte nicht mit der der ursprünglich verwendeten Teilchen pflanzlichen Ursprungs verwechselt werden. Für den praktischen Gebrauch als Einstreu sind Teilchen einer Größe von etwa 500 $\mu$m bis 2000 $\mu$m, also 0,5 mm bis 2 mm, günstig. Kleinere Teilchen wirken als Staub, sind daher unerwünscht und werden abgesiebt. Größere Teilchen fördern die Verklumpungsneigung nicht und werden weiter zerkleinert.

Ein alternativer Herstellungsprozess besteht darin, dass die trockene Vormischung nicht kompaktiert und mechanisch zerkleinert, sondern in einer Mischapparatur befeuchtet und die viskose Masse granuliert wird. Dies kann durch eine Aufbaugranulation mit einem rotierenden Granulierteller oder einer Granuliertrommel erfolgen oder man führt eine Feuchtgranulation durch, indem die viskose Mischung durch ein Sieb gedrückt wird. Auf diese Weise können auch ohne nachträgliche mechanische Zerkleinerung Teilchen der gewünschten Größe produziert werden. Nachteilig ist die im Vergleich zur Kompaktierung größere Menge an Wasser. Dieses muss zum Schluss durch eine Trocknung entfernt werden.

Die nach den oben beschriebenen Methoden hergestellte fertige Einstreu ist verkaufsfertig.

Der Benutzer verwendet sie als Tiereinstreu. Dazu wird das Produkt wie üblich etwa 4 bis 6 cm hoch in eine flache Plastikschale gefüllt. Bei lokaler Zugabe von Wasser oder Urin oder sonstiger Flüssigkeit verklumpt das Produkt. Der entstehende Klumpen kann nach einer Wartezeit von einigen Minuten mit einer Siebschaufel, wie sie z. B. als Katzenzubehör üblich ist, herausgenommen werden, ohne dass er dabei zerfällt.

Wie sich durch **Tests** hat bestätigen lassen, besitzen extrahierte trockene Zuckerrübenschnitzel eine maximale Wasseraufnahmekapazität von 4,5 g pro Gramm Zuckerrübenschnitzel. Durch das Mahlen auf die genannten Korngrößen steigt der Anteil des oberflächengebundenen Haftwassers an, und es werden Werte von mehr als 7 g Wasser-Aufnahmekapazität pro Gramm Zuckerrübenschnitzel erreicht. Übliche und auf dem Markt erhältliche Sorten von Katzenstreu auf mineralischer Basis, etwa auf der Basis von Bentonit, besitzen dagegen nur eine maximale Wasseraufnahme-Kapazität von etwa 2,0 g pro Gramm Einstreu.

Auch die in der ausgebreiteten erfindungsgemäßen Einstreu nach der lokalen Befeuchtung entstehenden Klumpen haben einen Wassergehalt, der deutlich größer ist als der von herkömmlicher Bentonit-Katzenstreu. Dabei ist die relative mechanische Stabilität eines Klumpens mit einer Wasserbeladung von zum Beispiel 3 g pro Gramm Einstreu so groß wie die einer gängigen Bentonit-Katzenstreu mit einer Beladung von nur 1,5 g pro Gramm Katzenstreu.

Von besonderem Vorteil ist die gute mechanische Stabilität, die die einzelnen Einstreupartikel mit der erfindungsgemäßen Korngrößenverteilung gerade auch in befeuchtetem Zustand besitzen. Wäre die mechanische Stabilität unbefriedigend, würde nicht nur der Verklumpungseffekt nicht eintreten, sondern außerdem wäre die einfache Entnahme problematisch.

Es gibt letztlich also zwei unterschiedliche "Festigkeiten", die für eine brauchbare Einstreu beachtet werden müssten: Zum einen die Festigkeit eines Teilchens in sich selbst, also seine Stabilität, zum anderen auch die Festigkeit des Klumpens, der sich nach einer Verklumpung mehrerer Teilchen miteinander gebildet hat.

Wie Tests (siehe unten) sehr rasch ergeben, sind zermahlene Zuckerrübenschnitzel ohne den Zusatz von Hilfsstoffen zur Förderung der Verklumpung zwar in sich selbst relativ stabil und besitzen eine gute Festigkeit, sich etwa bildende Klumpen jedoch überstehen keine mechanische Beanspruchung.

Besonders bevorzugt werden als Hilfsstoffe Polymere verwendet, die sich dadurch auszeichnen, dass sie bei einer Herstellung einer 2,5 %-igen wässrigen Lösung eine Viskosität von mehr als 50 mPa aufweisen.

Als brauchbar haben sich unter anderem Cellulosederivate, Galaktomannan, Stärke, Polyethylenoxid, Polyacrylsäure, Polyacrylamid oder auch Copolymere aus Acrylsäure und Acrylamid herausgestellt. Auch einige Mischungen aus diesen Substanzen sind mit Vorteil verwendbar. Unter den Cellulosederivaten sind insbesondere Carboxymethylcellulose, Methylcellulose, Hydroxyethylmethylcellulose oder Hydroxypropylmethylcellulose geeignet. Ein Cellulosederivat sollte allerdings nur in einem Anteil bis maximal 10 % eingesetzt werden.

Ein besonders geeignetes Galaktomannan ist Guarkernmehl. Auch dieses sollte nur in einem Anteil bis maximal 5 % zugesetzt werden.

Sofern Stärke verwendet wird, ist kaltwasserlösliche Stärke zu bevorzugen. Geeignet sind dabei insbesondere Kartoffelstärke, Tapioka-Stärke oder Wachsmaisstärke. Stärke sollte in einer Konzentration von maximal 20 % eingesetzt werden. Auch Stärkederivate wie zum Beispiel Carboxymethylstärke haben sich als geeignet erwiesen.

Neben Polyacrylsäure oder Copolymeren aus Acrylsäure können auch deren lösliche Salze eingesetzt werden.

Wenn nicht ausdrücklich anders angegeben, sind die %-Angaben jeweils als Gewichtsanteil bzw. Massenanteil zu verstehen.

Bei Verfahren zur Herstellung von Einstreu nach der Erfindung haben sich die beiden o. a. Alternativen als besonders geeignet erwiesen. Bevorzugt ist es also, wenn getrocknetes Material pflanzlichen Ursprungs in einer Mühle zerkleinert und anschließend gesiebt wird, dass der anfallende Grobanteil wieder in den Mahlprozess zurückgeführt wird, dass ein die Verklumpung der Mischung bei Feuchtigkeitszufuhr fördernder Hilfsstoff zugegeben wird, und dass die entstehende Mischung kompaktiert und mechanisch zerkleinert wird.

Alternativ zeichnet sich ein Verfahren dadurch aus, dass getrocknetes Material pflanzlichen Ursprungs in einer Mühle zerkleinert und anschließend gesiebt wird, dass der anfallende Grobanteil wieder in den Mahlprozess zurückgeführt wird, dass ein die Verklumpung der Mischung bei Feuchtigkeitszufuhr fördernder Hilfsstoff zugegeben wird, und dass die entstehende Mischung in einer Mischapparatur befeuchtet, darin auf die gewünschte Größe agglomeriert und anschließend auf die Gleichgewichtsfeuchte getrocknet wird.

Unter Kompaktieren kann hier zum Beispiel Extrudieren, Expandieren, Pelletieren oder Tablettieren verstanden werden.

Ein besonders wassersparendes Verfahren ergibt sich, wenn mit einer Tablettierung gearbeitet wird.

Zur regelmäßigen Überprüfung der Produktqualität bei der Herstellung ist es bevorzugt, wenn dass chargenweise oder kontinuierlich Proben des getrockneten Materials pflanzlichen Ursprung vor der Zugabe des die Verklumpung fördernden Hilfsstoffes entnommen und ihre Korngrößenverteilung bestimmt wird, vorzugsweise mit der Laserbeugungsmethode. In Versuchen hat sich dabei zum Beispiel das Modell HELOS der Firma SYMPATEC System-Partikel-Technik in Clausthal-Zellerfeld, DE, bewährt.

Im folgenden wird an Hand einiger Ausführungsbeispiele und Versuchsbeschreibungen eine nähere Erläuterung zu bestimmten Aspekten der Erfindung gegeben. Es zeigen:

**Figur 1**    eine schematische Darstellung eines Tests für Verklumpung und Feuchtabrieb;

**Figur 2**    eine Massensummenverteilung von vier unterschiedlich gemahlenen Pellets aus getrockneten, unmelassierten Zuckerrübenschnitzeln;

**Figur 3**    den Verlauf der Korngrößenverteilung von gemahlenen, getrockneten, unmelassierten Zuckerrübenschnitzeln;

**Figur 4**  die Gelfestigkeit gemessen mit dem Pektinometer als Funktion des Verhältnisses der Teilchenmasse unterhalb von 100 $\mu$m ($F_{100}$) zur Teilchenmasse zwischen 100 $\mu$m und 400 $\mu$m ($F_{400-100}$); und

**Figur 5**  eine Anpassung von zwei verschiedenen Korngrößenverteilungen von gemahlenen, getrockneten, unmelassierten Zuckerrübenschnitzeln an eine Gaußfunktion (durchgezogene Kurve stellt berechnete Funktion dar).

Wie oben erwähnt, gibt es letztlich also zwei unterschiedliche "festigkeiten, die für eine brauchbare Einstreu beachtet werden müssten: Zum einen die Festigkeit eines Teilchens in sich selbst, also seine Stabilität, zum anderen auch die Festigkeit des Klumpens, der sich nach einer Verklumpung mehrerer Teilchen miteinander gebildet hat.

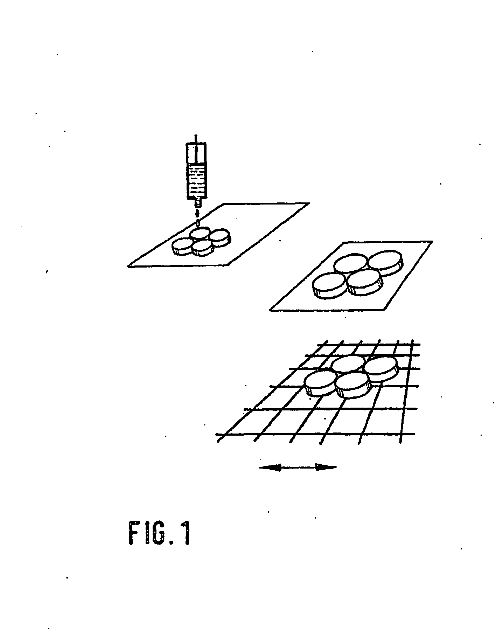

Verschiedene Tests für die beiden Festigkeiten wurden vorgenommen. **Figur 1** zeigt anschaulich den Verlauf eines Tests. Dabei wurden die kompaktierten Teilchen (vor der mechanischen Zerkleinerung, 3 mm Durchmesser und größer) mit einer standardmäßigen Feuchtigkeitsmenge benetzt, bei den Tests meistens die dreifache Menge an Wasser relativ zur Teilchenmasse. Die Teilchen saugen dann das Wasser auf und haften mehr oder weniger gut aneinander, bilden also Klumpen. Nach einer kurzen, der Praxis entsprechenden Wartezeit von zwei Minuten können dann die gequollenen Teilchen auf ein horizontal angeordnetes Maschendrahtsieb geschoben werden. Die Maschenweite wird dabei 1 mm größer gewählt als der Durchmesser der trockenen kompaktierten Teilchen, so dass die trockenen Teilchen hindurchfallen würden. Dieses Maschendrahtsieb wird dann 5 Minuten lang mit beispielsweise 350 Umdrehungen pro Minute kreisförmig bewegt.

Danach kann dann ausgezählt oder abgewogen werden, welcher Anteil der ursprünglich auf dem Sieb befindlichen gequollenen Teilchen sich auch danach noch auf diesem befindet. Dieser Anteil ist dann die Festigkeit des einzelnen Teilchens. Andererseits kann festgestellt werden, ob und in welcher Form der zunächst vorhandene Klumpen nach den mechanischen Beanspruchungen noch vorliegt. Ist der Klumpen in seine ursprünglichen einzelnen Teile zerfallen, wäre diese Festigkeit des Klumpens gleich Null.

Wie die Tests sehr rasch ergeben, sind zermahlene Zuckerrübenschnitzel ohne den Zusatz von Hilfsstoffen zur Förderung der Verklumpung zwar in sich selbst relativ stabil und besitzen eine gute Festigkeit, sich etwa bildende Klumpen jedoch überstehen keine mechanische Beanspruchung.

Werden solche Hilfsstoffe jedoch verwendet und wiederum zermahlene Zuckerrübenschnitzel eingesetzt, so bestätigen sich die vorteilhaften Eigenschaften nach der Erfindung. Optimale Ergebnisse erzielten Formteile aus gemahlenen Zuckerrübenschnitzeln mit einem Zusatz von 6 % Polyvinylpyrrolidon (Kollidon 90 F, BASF) nach einer Wasseraufnahme von 3 g pro Gramm Einstreu dann, wenn die Teilchenobergrenze bei 500 $\mu$m lag. 81 % der ursprünglichen Teilchen blieben stabil, ebenso blieben auch 81 % der Teilchen in Klumpenform beieinander.

Überraschenderweise zeigte sich bei einem Vergleich verschiedener möglicher Hilfsstoffe, dass zwar stark klebende, aber niedermolekulare Stoffe, wie beispielsweise Dextrin, eine geringere Festigkeit der Klumpen zur Folge hatten als solche Hilfsstoffe, die ein hohes Molekulargewicht und eine hohe Viskosität besitzen. Die erforderliche Hilfsstoffmenge lag im allgemeinen unter 10 %.

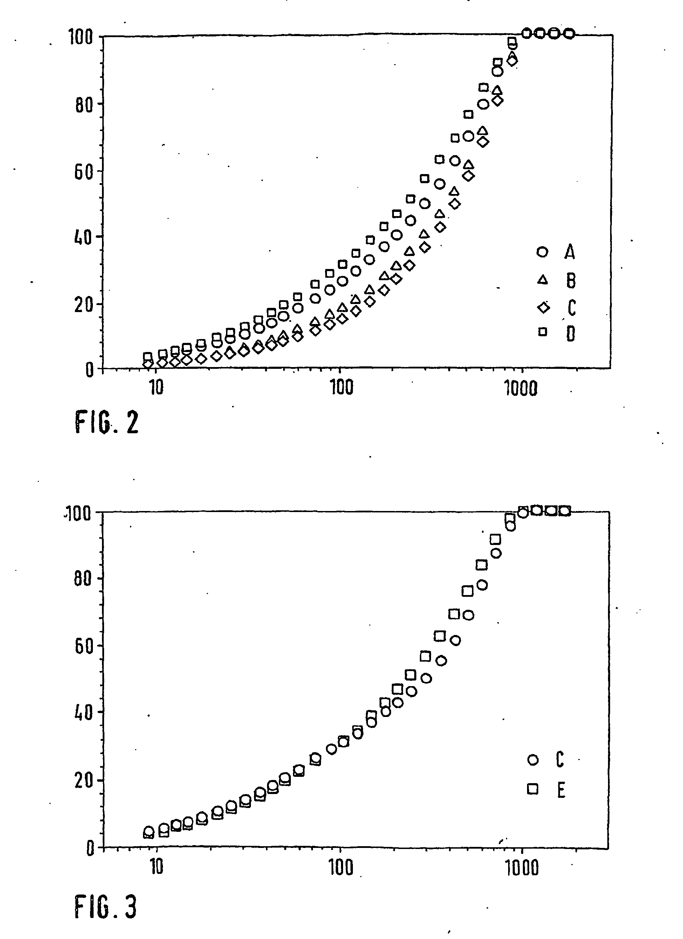

**Figur 2** zeigt einige beispielhafte Verteilungen A, B, C und D, die sich bei Versuchen als Messergebnisse herausgestellt hatten und Grundlage einer geeigneten Einstreu wurde. Nach rechts ist die Partikelgröße als Durchmesser in $\mu$m logarithmisch aufgetragen, nach oben die Massensummenverteilung $Q_3$ in Prozent (%).

Um den Einfluss der in dieser Anmeldung besonders beanspruchten Korngrößenverteilung auf die mechanische Stabilität des aus den einzelnen kompaktierten oder granulierten Teilchen mit Wasser gebildeten Klumpen zu messen, wurde die Gelfestigkeit mit einer Methode gemessen, wie sie zum Beispiel zur Festigkeitsbestimmung von Pektin-Gel, insbesondere von Marmeladen, üblich ist.

Verwendung findet das "Pektinometer" MARK III der Firma HERBSTREITH & Fox. Der Prüfbecher mit einem Durchmesser von 7,0 cm und einer Höhe von 5,5 cm und dem darin befindlichen mittig frei aufgestellten Einsatz wird mit 40 ml Katzenstreu gefüllt und dessen Masse durch Wägung bestimmt. Es wird die dreifache Masse an Wasser - gleichmäßig auf die Oberfläche der Probe verteilt - dazu pipettiert und dabei der Einsatz nach unten gedrückt, damit er seine Position auf dem Boden des Bechers behält. Der entstehende Klumpen dringt bis an die geriffelte Wandung des Prüfbechers vor, so dass er an den Prüfbecher fixiert ist. Nach einer Quellzeit von 20 min wird der herausstehende Haken des Einsatzes mit dem Haken des an den Kraft-Weg-Sensor gekoppelten Fadens gehängt und die Messung durch Hochziehen des Fadens mit 1 cm/s durch die Automatik des Messgerätes gestartet. Das Gerät misst nun entsprechend den fest eingestellten Parametern die Kraft (in Pond), die notwendig ist, um den Einsatz aus dem im Prüfbecher fixierten (simulierten) Klumpen herauszuziehen. Diese Messung wird insgesamt sechsmal durchgeführt. Diese so erhaltenen Zahlenwerte korrelieren mit der subjektiv beim Zusammendrücken in der Hand empfundenen Festigkeit der Klumpen, die sich durch lokale Befeuchtung der ausgebreiteten fertigen Streu bilden.

Um den Einfluss der Korngrößenverteilung zu ermitteln, wurde eine Charge getrockneter unmelassierter Zuckerrübenpellets in einer Hammermühle mit unterschiedlichen Einstellungen vermahlen, so dass die in **Figur 2** dargestellten Summenmassenverteilungen resultierten. Das jeweilige Mahlgut wurde mit 1 % Carboxymethylcellulose (Typ WALOCEL CRT 30000 P, WOLFF CELLULOSICS GmbH) vermischt und dann mit 12 Teilen Wasser und 2,5 Teilen Dampf auf 100 Teile Mahlgut konditioniert und in einem Doppelwellen-Extruder mit einem spezifischen Energieeintrag von 80 bis 100 kWh/kg, einer Kopftemperatur von 215 °C und einem Enddruck von 85 bis 90 bar (entsprechend 8.500 bis 9.000 kPa) kompaktiert.

Die in Figur 2 gezeigten Kurven A, B, C und D haben wie alle integrierten Kurven einen monoton ansteigenden Verlauf. Man sieht, dass sie bei einer Partikelgröße mit einem Durchmesser von etwa 1.000 $\mu$m den Wert von 100 % bei der Massenverteilung erreichen: Also sind alle Teilchen (100 %) kleiner als 1.000 $\mu$m. Ein Wert von etwa 50 % wird bei einer Partikelgröße um 200 $\mu$m bis 500 $\mu$m Durchmesser erreicht, die Summe der Masse der Teilchen mit kleinerem Durchmesser ist also hier so groß wie die Summe der Masse aller Teilchen mit größerem Durchmesser. Auffallend ist aber insbesondere, dass alle Kurven nur einen Wendepunkt vor dem Erreichen der Partikelobergrenze bei 1.000 $\mu$m besitzen

**Figur 3** mit übrigen identischen Skalierungen zu Figur 2 zeigt beispielhaft den Vergleich mit einer anderen Verteilung mit zwei Wendepunkten (Kurve C gegenüber Kurve E).

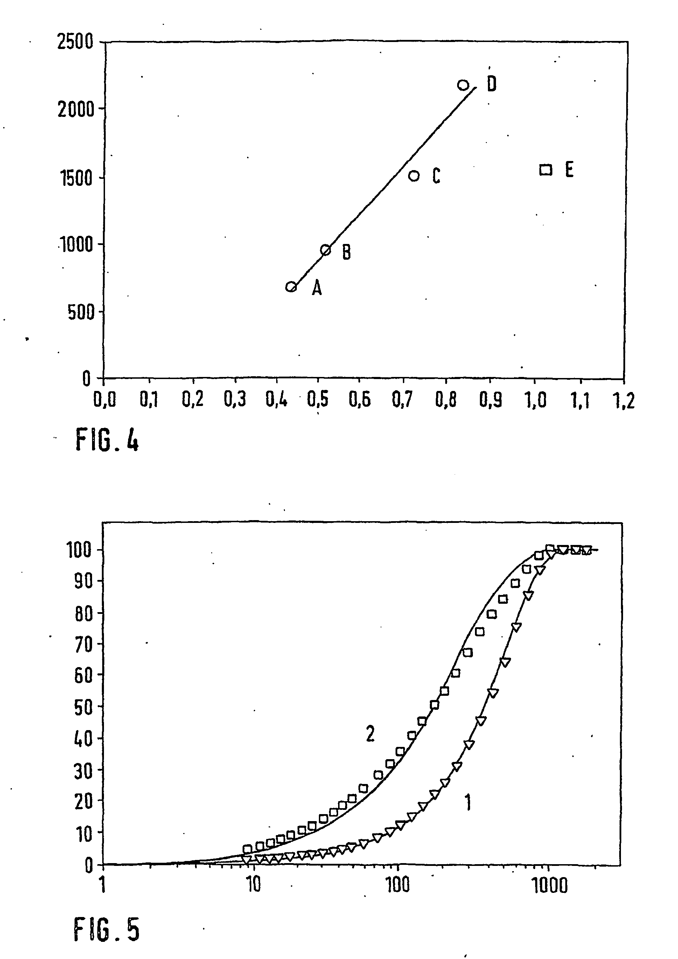

In **Figur 4** ist nach rechts das Verhältnis der Teilchenmasse der Teilchen mit einem Durchmesser unter 100 $\mu$m ($F_{100}$) zur Teilchenmasse der Teilchen mit einem Durchmesser zwischen 100 $\mu$m und 400 $\mu$m ($F_{400-100}$) aufgetragen, nach oben die Gelfestigkeit in Pond (p), gemessen mit einem Pektinometer. Die in der **Tabelle 1** und der Figur 4 gezeigten Festigkeitswerte des mit dem Material erzeugten Gels zeigen, dass die Festigkeit zunimmt, je breiter die Korngrößenverteilung ist. Als Maß für diese Breite kann das Verhältnis der Teilchenmasse unter 100 $\mu$m zur Teilchenmasse zwischen 100 und 400 $\mu$m angesehen werden. Die Gelfestigkeit des Materials E ist niedriger als nach dem Verhalten der Materialien A, B, C und D zu erwarten gewesen wäre, weil sich der zusätzliche Wendepunkt in der Korngrößenverteilung negativ auswirkt.

Inwieweit sich erfindungsgemäß die Abweichung von einer Gauß schen Normalverteilung positiv auswirkt, geht aus **Figur 5** hervor. Nach rechts ist die Partikelgröße als Durchmesser in $\mu$m logarithmisch aufgetragen, nach oben die integrierte Massenverteilung in Prozent (%). Die dort gezeigten mit Hilfe der Laserbeugungsmethode bestimmten Summenmassenverteilungen von unterschiedlich gemahlenen getrockneten Zuckerrübenschnitzelpellets wurden mathematisch durch Gauß-Verteilungen als Funktion der Korngröße $x$

$$G(x) = A \exp\left(-(x-x_0)^2 / \sigma^2 / 2\right)$$

mit Hilfe eines geeigneten Programms (z.B. SIGMA PLOT 2000, Version 6.0, SPSS Science) simuliert. Die Parameter der Gauß-Verteilung

$\sigma$ Standardabweichung

$x_0$ Mittlere Korngröße

$A$ Normalisierungsfaktor

wurden zunächst solange variiert, bis die Abweichung zwischen den berechneten Werten und den differenzierten Summenverteilungen minimal war. Mit den so gewonnenen Startwerten wurde dann die integrierte Form der Gauß-Verteilung, die sogenannte Error-Funktion die sogenannte Error-Funktion

$$erf = B \int_0^x \exp\left(-u^2\right) du$$

durch numerische Integration-näherungsweise beginnend bei 0,01 um - mit

$$u^2 = (x-x_0)^2 / \sigma^2 / 2$$

berechnet und an die Messwerte angepasst, wobei

$$1/B = \int_0^{x=2\,mm} \exp\left(-u^2\right) du$$

wiederum durch numerische Integration bis zur Dimension, bei der 100 % Massenanteil erreicht werden, hier 2.000 $\mu$m, berechnet wurde. Die Daten der Kurve 1 können noch durch eine Gauß-Funktion mit einem mittleren Partikeldurchmesser von 300 $\mu$m wiedergegeben werden. Im Fall der Kurve 2 gelingt dies nur näherungsweise mit einem negativen mittleren Partikeldurchmesser, der physikalisch unsinnig ist Die Verklumpungseigenschaften des aus dem Mahlgut (1) durch Extrudierten hergestellten Katzenstreu war unzureichend, während das unter gleichen Bedingungen hergestellte Streu aus dem Mahlgut (2) hervorragend klumpte.

In der **Tabelle 1** ist der Einfluss der Breite der Korngrößenverteilung auf die Gelfestigkeit des Endproduktes dargestellt.

Ausgehend von getrockneten Rübenmaterial für A bis E bzw. 1 und 2 wurde das jeweilige Mahlgut mit 1 % Carboxymethylcellulose (Typ WALOCEL CRT 30000 P, WOLFF CELLULOSICS GmbH) vermischt und dann mit 12 Teilen Wasser und 2.5 Teilen Dampf auf 100 Teile Mahlgut konditioniert und in einem Doppelwellen-Extruder mit einem spezifischen Energieeintrag von 80 bis 100 kWh/kg, einer Kopftemperatur von 215 °C und einem Enddruck von 85 bis 90 bar kompaktiert, auf ca. 12 % Endfeuchte getrocknet und auf dieselbe mittlere Korngröße von 0,5 mm bis 1,2 mm zerkleinert.

**Tabelle 1**

| Versuch | Verteilungsbreite | Gelfestigkeit | Gauß-Verteilung | |
|---|---|---|---|---|
| | $F_{100}$ / $F_{400-100}$ | Abreißkraft [p] | Mittelwert $X_o$ | Standardabw. $\sigma$ |
| A | 0.434 | 671 | | |
| B | 0.516 | 942 | | |
| C | 0.724 | 1497 | | |
| D | 0.837 | 2160 | | |
| E | 1.02 | 1506 | | |
| | | | | |
| 1 | 0.292 | 790 | 300 | 360 |
| 2 | 0.810 | 2400 | -1000 | 600 |

**Patentansprüche**

1. Einstreu für Katzen und Kleintiere, bestehend aus einer Mischung aus getrocknetem Material pflanzlichen Ursprungs und einem die Verklumpung der Mischung bei Feuchtigkeitszufuhr fördernden Hilfsstoff,
   **dadurch gekennzeichnet,**
   **dass** das getrocknete Material pflanzlichen Ursprungs in einem Korngrößenspektrum vorliegt,
   bei dem die Durchmesser von 80 % der Teilchen bezogen auf die Masse zwischen mehr als 0 $\mu$m und weniger als 1.000 $\mu$m betragen,
   bei dem die Massensummenverteilung der Korngrößenverteilung zumindest in dem Bereich zwischen 50 $\mu$m und 1.000 $\mu$m größer ist als eine integrierte statistische Gauß-Verteilung,
   bei der die Gauß-Verteilung eine Gauß'sche Normalverteilung mit einem Mittelwert von 100 $\mu$m und einer Standardabweichung von 800 $\mu$m ist, und bei dem die Korngrößenverteilung um mehr als 10 % von dieser statistischen Gauß-Verteilung abweicht.

2. Einstreu nach Anspruch 1,
   **dadurch gekennzeichnet,**
   **dass** das getrocknete Material pflanzlichen Ursprungs in einem Korngrößenspektrum liegt, bei dem 90 % der Teilchen (bezogen auf die Masse) einen Durchmesser der Teilchen von mehr als 0 $\mu$m und weniger als 1.000 $\mu$m Durchmesser besitzen, bevorzugt von weniger als 600 $\mu$m, insbesondere weniger als 400 $\mu$m.

3. Einstreu nach Anspruch 1 oder Anspruch 2,
   **dadurch gekennzeichnet,**
   **dass** die Korngrößenverteilung innerhalb dieses Korngrößenspektrums so ist, dass die Masse der Teilchen mit einer Korngröße im unteren Drittel des Spektrums mehr als 20 % der Gesamtmasse der Teilchen beträgt.

**4.** Einstreu nach einem der vorstehenden Ansprüche,
**dadurch gekennzeichnet,**
**dass** die Korngrößenverteilung so ist, dass das Verhältnis des Massenanteils der weniger als 100 µm großen Teilchen zum Massenanteil der Teilchen mit einem Durchmesser zwischen 100 µm und 400 µm mindestens zwei zu drei und vorzugsweise weniger als sieben zu drei beträgt.

**5.** Einstreu nach einem der vorstehenden Ansprüche,
**dadurch gekennzeichnet,**
**dass** die Massensummenverteilung mit einer Genauigkeit von ± 30 % eine monoton steigende Funktion mit nur einem Wendepunkt vor der maximalen Partikelgröße darstellt.

**6.** Einstreu nach einem der vorstehenden Ansprüche,
**dadurch gekennzeichnet,**
**dass** innerhalb des Korngrößenspektrums eine polydisperse gleichmäßige Verteilung vorliegt, wobei innerhalb des Bereiches zwischen einer Korngröße von 40 µm und einer Korngröße von 400 µm der relative Anteil nicht um mehr als ± 30 % schwankt.

**7.** Einstreu nach einem der vorstehenden Ansprüche,
**dadurch gekennzeichnet,**
**dass** das getrocknete Material pflanzlichen Ursprungs Zuckerrübenschnitzel und/oder ausgelaugte Zichorienwurzeln und/oder Citruspellets sind.

**8.** Einstreu nach einem der vorstehenden Ansprüche,
**dadurch gekennzeichnet,**
**dass** der die Verklumpung fördernde Hilfsstoff ein wasserlösliches Polymer ist.

**9.** Einstreu nach Anspruch 8,
**dadurch gekennzeichnet,**
**dass** das Polymer eine Substanz oder eine Mischung aus mehreren Substanzen der Gruppe bestehend aus Cellulosederivat, Galaktomannan, Stärke, Stärkederivaten, Polyacrylsäure, Polyacrylamid oder Copolymeren aus Acrylsäure und Acrylamid sowie Salzen der Polyacrylsäure oder der Copolymere ist.

**10.** Einstreu nach Anspruch 9,
**dadurch gekennzeichnet,**
**dass** das Cellulosederivat Carboxymethylcellulose, Methylcellulose, Hydroxyethylmethylcellulose oder Hydroxypropylmethylcellulose ist.

**11.** Einstreu nach Anspruch 9 oder 10,
**dadurch gekennzeichnet,**
**dass** das Cellulosederivat mit einem Anteil von maximal 10 % enthalten ist.

**12.** Einstreu nach einem der Ansprüche 9 bis 11,
**dadurch gekennzeichnet,**
**dass** das Polymer eine Chemikalie ist, die als 2,5 %-ige wässrige Lösung eine Viskosität von mehr als 50 mPa aufweist.

**13.** Einstreu nach einem der vorstehenden Ansprüche,
**dadurch gekennzeichnet,**
**dass** das Galaktomannan vorzugsweise Guarkernmehl ist.

**14.** Einstreu nach Anspruch 13,
**dadurch gekennzeichnet,**
**dass** das Galaktomannan in einem Anteil von maximal 5 % enthalten ist.

**15.** Einstreu nach Anspruch 9,
**dadurch gekennzeichnet,**
**dass** die Stärke oder das Stärkederivat kaltwasserlöslich ist.

**16.** Einstreu nach Anspruch 15,
**dadurch gekennzeichnet,**
**dass** die Stärke Kartoffelstärke, Tapioka-Stärke oder Wachsmaisstärke oder eine Mischung aus diesen Stärken ist.

**17.** Einstreu nach einem der Ansprüche 15 oder 16,
**dadurch gekennzeichnet,**
**dass** die Stärke in einer Konzentration von maximal 20 % enthalten ist.

**18.** Einstreu nach einem der Ansprüche 15 bis 17,
**dadurch gekennzeichnet,**
**dass** das Stärkederivat Carboxymethylstärke ist.

**19.** Einstreu nach einem der Ansprüche 5 bis 18,
**dadurch gekennzeichnet,**
**dass** eine geruchsadsorbierende Substanz für den Eigengeruch der Zuckerrübenschnitzel enthalten ist.

**20.** Einstreu nach einem der vorstehenden Ansprüche,
**dadurch gekennzeichnet,**
**dass** als geruchsabsorbierende Substanz' anorganische Zusätze, insbesondere poröse anorganische Zusätze wie Bentonit und/oder Zeolith und/oder Kieselgur, mit einem Anteil von insgesamt bis zu 20% enthalten sind.

**21.** Einstreu nach Anspruch 20,
**dadurch gekennzeichnet,**
**dass** der Zeolith ein natürlicher Zeolith vom Typ Clinoptilolith ist.

**22.** Einstreu nach Anspruch 20,
**dadurch gekennzeichnet,**
**dass** als Zusatz Bentonit mit einem hohen Anteil an Montmorillonit, insbesondere Montmorillonit in der mit aliphatischen Aminen oder mit Alkaliionen ausgetauschten Form, insbesondere in der $Na^+$-Form, oder in der $H^+$-Form vorliegt.

**23.** Einstreu nach Anspruch 22,
**dadurch gekennzeichnet,**
**dass** ein aktiviertes Bentonit mit einer BET-Oberfläche von mehr als 100 $m^{2'}/g$ eingesetzt wird.

**24.** Einstreu nach einem der vorstehenden Ansprüche 19 bis 23,
**dadurch gekennzeichnet,**
**dass** als absorbierende Substanz Cyclodextrin, insbesondere β-Cyclodextrin, und/oder Salze von Übergangsmetallionen und/oder Aluminiumsalze einsetzt werden.

**25.** Einstreu nach Anspruch 19,
**dadurch gekennzeichnet,**
**dass** als geruchsabsorbierende Substanz Getreidemehl mit einem Anteil von insgesamt bis zu 20 % enthalten ist.

**26.** Einstreu nach einem der vorstehenden Ansprüche,
**dadurch gekennzeichnet,**
**dass**, der trockenen Mischung aus gemahlenem Material pflanzlichen Ursprungs und dem die Verklumpung fördernden Hilfsstoff ein zur späteren Einstellung des pH-Wertes nach der Befeuchtung geeigneter Stoff, insbesondere ein Salz, zugefügt ist..

**27.** Einstreu nach Anspruch 26,
**dadurch gekennzeichnet,**
**dass** der Stoff, insbesondere das Salz, zur Einstellung eines pH-Wertes zwischen 4 und 8 geeignet ist.

**28.** Einstreu nach Anspruch 26,
**dadurch gekennzeichnet,**
**dass** der trockenen Mischung aus gemahlenem Material pflanzlichen Ursprungs und dem die Verklumpung fördernden Hilfsstoff ein zur Farbaufhellung geeignetes festes, trockenes Pigment zugefügt ist, vorzugsweise mit weniger als 20 %.

29. Verfahren zur Herstellung von Einstreu nach einem der vorstehenden Ansprüche,
**dadurch gekennzeichnet,**
**dass** getrocknetes Material pflanzlichen Ursprungs in einer Mühle zerkleinert und anschließend gesiebt wird,
**dass** der anfallende Grobanteil wieder in den Mahlprozess zurückgeführt wird, -
**dass** ein die Verklumpung der Mischung bei Feuchtigkeitszufuhr fördernder Hilfsstoff zugegeben wird, und
**dass** die entstehende Mischung kompaktiert und mechanisch zerkleinert wird.

30. Verfahren zur Herstellung von Einstreu nach Anspruch 29,
**dadurch gekennzeichnet,**
**dass** die trockene Mischung vor dem Kompaktieren mit Wasser und Dampf befeuchtet wird und nach dem Kompaktieren in einem Kühler und einem Trockner auf die Gleichgewichtsfeuchte getrocknet wird.

31. Verfahren zur Herstellung von Einstreu nach einem der Ansprüche 1 bis 28,
**dadurch gekennzeichnet,**
**dass** getrocknetes Material pflanzlichen Ursprungs in einer Mühle zerkleinert und anschließend gesiebt wird,
**dass** der anfallende Grobanteil wieder in den Mahlprozess zurückgeführt wird,
**dass** ein die Verklumpung der Mischung bei Feuchtigkeitszufuhr fördernder Hilfsstoff zugegeben wird, und
**dass** die entstehende Mischung in einer Mischapparatur befeuchtet, darin auf die gewünschte Größe agglomeriert und anschließend auf die Gleichgewichtsfeuchte getrocknet wird.

32. Verfahren zur Herstellung von Einstreu nach einem der Ansprüche 30 oder 31,
**dadurch gekennzeichnet,**
**dass** der pH-Wert des zugeführten Wassers auf Werte bis 9 angehoben wird.

33. Verfahren zur Herstellung von Einstreu nach einem der vorstehenden Ansprüche,
**dadurch gekennzeichnet,**
**dass** chargenweise oder kontinuierlich Proben des getrockneten Materials pflanzlichen Ursprung vor der Zugabe des die Verklumpung fördernden Hilfsstoffes entnommen und ihre Korngrößenverteilung bestimmt wird, vorzugsweise mit der Laserbeugungsmethode.

**Claims**

1. Litter for cats and small animals, composed of a mixture of dried material of plant origin and an auxiliary agent promoting clumping of the mixture upon the addition of moisture, **characterised in that** the dried material of plant origin is present in a particle size range in which the diameters of 80% of the particles by mass amount to between more than 0 μm and less than 1000 μm,
in which the mass cumulative distribution of the particle size distribution is at least in the range of between 50 μm and 1000 μm greater than an integrated statistical Gaussian distribution,
in which the Gaussian distribution is a Gaussian normal distribution with a mean of 100 μm and a standard deviation of 800 μm, and
in which the particle size distribution deviates from this statistical Gaussian distribution by more than 10%.

2. Litter according to Claim 1, **characterised in that** the dried material of plant origin lies in a particle size range, in which 90% of the particles (by mass) have a diameter of the particles of more than 0 μm and less than 1000 μm diameter, preferably of less than 600 μm, in particular less than 400 μm.

3. Litter according to Claim 1 or Claim 2, **characterised in that** the particle size distribution within this particle size range is such that the mass of the particles with a particle size in the lower third of the range amounts to more than 20% of the total mass of the particles.

4. Litter according to one of the preceding claims, **characterised in that** the particle size distribution is such that the ratio of the proportion by mass of particles of less than 100 μm to the proportion by mass of particles with a diameter of between 100 μm and 400 μm amounts to at least two to three and preferably less than seven to three.

5. Litter according to one of the preceding claims, **characterised in that** the mass cumulative distribution with an accuracy of $\pm$ 30% represents a monotonically rising function with only one inflection point before the maximum particle size.

6. Litter according to one of the preceding claims, **characterised in that** a polydisperse uniform distribution is present within the particle size range, wherein within the range between a particle size of 40 $\mu$m and a particle size of 400 $\mu$m the relative proportion fluctuates by not more than $\pm$ 30%.

7. Litter according to one of the preceding claims, **characterised in that** the dried material of plant origin is sugar beet cossettes and/or pulped chicory roots and/or citrus pellets.

8. Litter according to one of the preceding claims, **characterised in that** the auxiliary agent promoting clumping is a water-soluble polymer.

9. Litter according to Claim 8, **characterised in that** the polymer is a substance or a mixture of several substances of the group comprising cellulose derivative, galacto-mannan, starch, starch derivatives, polyacrylic acid, polyacrylamide or copolymers composed of acrylic acid and acrylamide as well as salts of the polyacrylic acid or the copolymers.

10. Litter according to Claim 9, **characterised in that** the cellulose derivative is carboxymethyl cellulose, methyl cellulose, hydroxyethylmethyl cellulose or hydroxypropylmethyl cellulose.

11. Litter according to Claim 9 or 10, **characterised in that** the cellulose derivative is contained in a maximum proportion of 10%.

12. Litter according to one of Claims 9 to 11, **characterised in that** the polymer is a chemical, which as a 2.5% aqueous solution has a viscosity of more than 50 mPa.

13. Litter according to one of the preceding claims, **characterised in that** the galacto-mannan is preferably guar meal.

14. Litter according to Claim 13, **characterised in that** the galacto-mannan is contained in a maximum proportion of 5%.

15. Litter according to Claim 9, **characterised in that** the starch or starch derivative is soluble in cold water.

16. Litter according to Claim 15, **characterised in that** the starch is potato starch, tapioca starch or corn starch, or a mixture of these starches.

17. Litter according to one of Claims 15 or 16, **characterised in that** the starch is contained in a maximum concentration of 20%.

18. Litter according to one of Claims 15 to 17, **characterised in that** the starch derivative is carboxymethyl starch.

19. Litter according to one of Claims 5 to 18, **characterised in that** an odour-adsorbing [sic] substance for the inherent odour of the sugar beet cossettes is included.

20. Litter according to one of the preceding claims, **characterised in that** inorganic additions, in particular porous inorganic additions such as bentonite and/or zeolite and/or diatomaceous earth, are contained as odour-absorbing substance in a proportion of up to 20% in total.

21. Litter according to Claim 20, **characterised in that** the zeolite is a natural zeolite of the type clinoptilolite.

22. Litter according to Claim 20, **characterised in that** bentonite with a high proportion of montmorillonite, in particular montmorillonite in the form exchanged with aliphatic amines or with alkali ions, in particular in $Na^+$ form or in $H^+$ form, is present as addition.

23. Litter according to Claim 22, **characterised in that** an activated bentonite with a BET surface of more than 100 $m^2$/g is used.

**24.** Litter according to one of the preceding Claims 19 to 23, **characterised in that** cyclodextrin, in particular β-cyclodextrin, and/or salts of transition metal ions and/or aluminium salts are used as absorbent substance.

**25.** Litter according to Claim 19, **characterised in that** flour is included as odour-absorbing substance with a proportion of up to 20% in total.

**26.** Litter according to one of the preceding claims, **characterised in that** a substance, in particular a salt, suitable for subsequent adjustment of the pH value after wetting is added to the dry mixture of ground material of plant origin and the auxiliary agent promoting clumping.

**27.** Litter according to Claim 26, **characterised in that** the substance, in particular the salt, is suitable for adjustment of a pH value between 4 and 8.

**28.** Litter according to Claim 26, **characterised in that** a solid dry pigment suitable for lightening the colour is added to the dry mixture of ground material of plant origin and the auxiliary agent promoting clumping, preferably to less than 20%.

**29.** Process for the production of litter according to one of the preceding claims, **characterised in that**
dried material of plant origin is crushed in a mill and subsequently sieved, that the coarse fraction formed is returned to the grinding process again, that an auxiliary agent promoting clumping of the mixture on the addition of moisture is added, and
that the resulting mixture is compacted and mechanically crushed.

**30.** Process for the production of litter according to Claim 29, **characterised in that**
the dry mixture is wetted with water and steam before compacting and after compacting is dried in a cooler and a dryer to the equilibrium moisture content.

**31.** Process for the production of litter according to one of Claims 1 to 28, **characterised in that**
dried material of plant origin is crushed in a mill and subsequently sieved, that the coarse fraction formed is returned to the grinding process again, that an auxiliary agent promoting clumping of the mixture on the addition of moisture is added, and
that the resulting mixture is wetted in a mixing machine, is agglomerated to the desired size therein and is then dried to the equilibrium moisture content.

**32.** Process for the production of litter according to one of Claims 30 or 31, **characterised in that**
the pH value of the added water is raised to values of up to 9.

**33.** Process for the production of litter according to one of the preceding claims, **characterised in that**
samples of the dried material of plant origin are removed continuously or in batches prior to the addition of the auxiliary agent promoting clumping and their particle size distribution determined, preferably using the laser diffraction method.

**Revendications**

**1.** Litière pour chats et petits animaux, consistant en un mélange de matériau sec d'origine végétale et en un adjuvant favorisant l'agglomération du mélange lors d'un apport d'humidité,
**caractérisée en ce que**
le matériau sec d'origine végétale se présente en un spectre de granulations
dans lequel les diamètres de 80 % des particules par rapport à la masse se situent entre plus de 0 μm et moins de 1,000 μm,
dans lequel la distribution totale en poids de la distribution des granulations au moins dans la plage entre 50 μm et 1,000 μm est plus grande qu'une distribution statistique de Gauss intégrée,
dans lequel la distribution de Gauss est une distribution normale gaussienne présentant une valeur moyenne de 100 μm et un écart type de 800 μm, et dans lequel la distribution des granulations diverge de plus de 10 % de cette distribution statistique de Gauss.

**2.** Litière selon la revendication 1,
**caractérisée en ce que**
le matériau sec d'origine végétale se situe dans un spectre de granulations dans lequel 90 % des particules (par rapport au poids) possèdent un diamètre de particules de plus de 0 μm et de moins de 1,000 μm de diamètre, de préférence de moins de 600 μm, en particulier, de moins de 400 μm.

**3.** Litière selon la revendication 1 ou la revendication 2,
**caractérisée en ce que**
la distribution des granulations dans ce spectre de granulations est telle que le poids des particules présentant une granulation dans le tiers inférieur du spectre est de plus de 20 % du poids total des particules.

**4.** Litière selon l'une des revendications précédentes,
**caractérisée en ce que**
la distribution des granulations est telle que le rapport de proportion en poids des particules inférieures à 100 μm à la proportion en poids des particules présentant un diamètre entre 100 μm et 400 μm est au moins deux à trois et de préférence est de moins de sept à trois.

**5.** Litière selon l'une des revendications précédentes,
**caractérisée en ce que**
la distribution totale des masses représente avec une exactitude de ± 30 %, une fonction croissante monotone comportant uniquement un point d'inflexion avant la taille de particules maximale.

**6.** Litière selon l'une des revendications précédentes,
**caractérisée en ce que**,
dans le spectre de granulations se trouve une distribution uniforme polydispersée, dans laquelle, dans la plage entre une granulation de 40 μm et une granulation de 400 μm, la proportion relative ne varie pas de plus de ± 30 %.

**7.** Litière selon l'une des revendications précédentes,
**caractérisée en ce que**
le matériau sec d'origine végétale est des copeaux de betterave à sucre et/ou des racines de chicorée et/ou des granulés d'agrume.

**8.** Litière selon l'une des revendications précédentes,
**caractérisée en ce que**
l'adjuvant favorisant l'agglomération est un polymère soluble dans l'eau.

**9.** Litière selon la revendication 8,
**caractérisée en ce que**
le polymère est une substance ou un mélange de plusieurs substances du groupe constitué de dérivé de cellulose, de galactomannane, d'amidon, de dérivés d'amidon, d'acide polyacrylique, de polyacrylamide ou de copolymères d'acide acrylique et d'acrylamide et de sels d'acide polyacrylique ou de copolymères.

**10.** Litière selon la revendication 9, **caractérisée en ce que** le dérivé de cellulose est la carboxyméthylcellulose, la méthylcellulose, l'hydroxyéthylméthylcellulose ou l'hydroxypropylméthylcellulose.

**11.** Litière selon la revendication 9 ou 10,
**caractérisée en ce que**
le dérivé de cellulose est contenu en une proportion au maximum de 10 %.

**12.** Litière selon l'une des revendications 9 à 11,
**caractérisée en ce que**
le polymère est un produit chimique qui présente en tant que solution aqueuse à 2,5 %, une viscosité de plus de 50 mPa.

**13.** Litière selon l'une des revendications précédentes,
**caractérisée en ce que**
le galactomannane est de préférence la farine de graines de guar.

**14.** Litière selon la revendication 13,
**caractérisée en ce que**
le galactomannane est contenu en une proportion de 5 % au maximum.

**15.** Litière selon la revendication 9,
**caractérisée en ce que**
l'amidon ou le dérivé d'amidon est soluble dans l'eau froide.

**16.** Litière selon la revendication 15,
**caractérisée en ce que**
l'amidon est de la fécule de pomme de terre, de l'amidon de tapioca ou de l'amidon de maïs cireux ou un mélange de ces amidons.

**17.** Litière selon l'une des revendications 15 ou 16,
**caractérisée en ce que**
l'amidon est contenu en une concentration de 20 % au maximum.

**18.** Litière selon l'une des revendications 15 à 17,
**caractérisée en ce que**
le dérivé d'amidon est l'amidon de carboxyméthyle.

**19.** Litière selon l'une des revendications 5 à 18,
**caractérisée en ce**
**qu'**une substance absorbant les odeurs est contenue pour l'odeur propre des copeaux de betterave à sucre.

**20.** Litière selon l'une des revendications précédentes,
**caractérisée en ce que**
sont contenues comme substances absorbant les odeurs, des additifs anorganiques, en particulier des additifs anorganiques poreux tels que la bentonite et/ou la zéolithe et/ou la terre de diatomées, en une proportion au total allant jusqu'à 20 %.

**21.** Litière selon la revendication 20,
**caractérisée en ce que**
la zéolithe est une zéolithe naturelle de type clinoptilolite.

**22.** Litière selon la revendication 20,
**caractérisée en ce que**,
comme additif, la bentonite se présente en une proportion élevée de montmorillonite, en particulier, de montmorillonite sous forme échangée avec des amines aliphatiques ou avec des ions alcalins, en particulier sous la forme $Na^+$ ou sous la forme $H^+$.

**23.** Litière selon la revendication 22,
**caractérisée en ce que**
l'on utilise une bentonite activée présentant une surface BET de plus de 100 $m^{2'}$/g.

**24.** Litière selon l'une des revendications 19 à 23 précédentes,
**caractérisée en ce que**,
l'on utilise comme substance absorbante, de la cyclodextrine, en particulier de la β-cyclodextrine et/ou des sels d'ions métalliques de transition et/ou des sels d'aluminium.

**25.** Litière selon la revendication 19,
**caractérisée en ce que**
de la farine de céréales en tant qu'absorbant d'odeurs, est contenue en une proportion totale allant jusqu'à 20 %.

**26.** Litière selon l'une des revendications précédentes,
**caractérisée en ce que**
l'on ajoute au mélange sec de matériau broyé d'origine végétale et à l'adjuvant favorisant l'agglomération, une substance appropriée pour l'ajustement ultérieur du pH après humidification, en particulier un sel.

**27.** Litière selon la revendication 26,
**caractérisée en ce que**
la substance, en particulier le sel, est approprié(e) pour l'ajustement d'un pH entre 4 et 8.

**28.** Litière selon la revendication 26,
**caractérisée en ce**
**qu'**au mélange sec de matériau broyé d'origine végétale et à l'adjuvant favorisant l'agglomération est ajouté un pigment sec solide, approprié pour éclaircir la couleur, de préférence à moins de 20 %.

**29.** Procédé de production de litière selon l'une des revendications précédentes,
**caractérisé en ce que**
le matériau sec d'origine végétale est broyé dans un moulin et est ensuite tamisé, **en ce que** la proportion grossière obtenue est réacheminée au processus de broyage,
**en ce qu'**un adjuvant favorisant l'agglomération du mélange lors de l'apport d'humidité est ajouté,
et **en ce que** le mélange obtenu est compacté et est broyé mécaniquement.

**30.** Procédé de production de litière selon la revendication 29,
**caractérisé en ce que**
le mélange sec est humidifié à l'eau et à la vapeur avant le compactage et est séché après le compactage dans un refroidisseur et dans un séchoir à l'humidité à l'équilibre.

**31.** Procédé de production de litière selon l'une des revendications 1 à 28,
**caractérisé en ce que**
le matériau sec d'origine végétale est broyé dans un moulin et ensuite est tamisé,
**en ce que** la proportion grossière obtenue est réacheminée au processus de broyage,
**en ce qu'**un adjuvant favorisant l'agglomération du mélange lors d'un apport d'humidité est ajouté,
et **en ce que** le mélange obtenu est humidifié dans un appareil de mélange, est aggloméré à la dimension souhaitée dans celui-ci et ensuite, est séché à l'humidité d'équilibre.

**32.** Procédé de production de litière selon l'une des revendications 30 ou 31,
**caractérisé en ce que**
le pH de l'eau apportée est porté à des valeurs jusqu'à 9.

**33.** Procédé de production de litière selon l'une des revendications précédentes,
**caractérisé en ce que**
des échantillons du matériau séché d'origine végétale sont prélevés par lot ou en continu avant l'addition de l'adjuvant favorisant l'agglomération et sa distribution de granulations est déterminée, de préférence avec le procédé de diffraction au laser.

FIG.1

FIG. 2

FIG. 3

FIG. 4

FIG. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19543311 C1
- DE 3707473 C2
- EP 0676135 A1
- US PS5605114 A
- US PS4386580 A
- US PS5183010 A
- EP 0298143 A1
- DE 4101243 A1
- US PS5230305 A
- WO 9634323 A
- WO 9105464 A
- US PS4883021 A

### In der Beschreibung aufgeführte Nicht-Patentliteratur

- **R. ZEKOM.** *COSMETICS & TOILETRIES MAGAZIN,* 1997, vol. 112, 37-40
- **VINCENT M. DRONNET et al.** *INDUSTRIES ALIMENTAIRES & AGRICOLES,* 1999, vol. 116, 29-35
- **CHRISTOPH BUTTERSACK.** Grundlage der mechanischen Entwässerung von Zuckerrübenschnitzeln. *Zuckerindustrie,* 1994, vol. 119 (10), 831-846
- **H. MOHR ; P. SCHOPFER.** Lehrbuch der Pflanzenphysiologie. 1978, 37-40